# EUROPÄISCHE PATENTSCHRIFT

(11) **EP 0 556 670 B1**
(45) Veröffentlichungstag und Bekanntmachung des Hinweises auf die Patenterteilung: **23.11.1994**
(21) Anmeldenummer: 93101835.2
(22) Anmeldetag: 05.02.1993
(51) Int. Cl.: C08J 11/00, C09D 7/00

(54) **Verfahren zur Aufarbeitung von Lackschlamm**
Process for reclaiming lacquer coagulates
Procédé de récuperation des boues de peintures

(30) Priorität: 18.02.1992 DE 4204817
(43) Veröffentlichungstag der Anmeldung: 25.08.1993
(73) Patentinhaber: BAYER AG, 51368 Leverkusen (DE)
(72) Erfinder: Hovestadt, Wieland, Dr., W-4150 Krefeld (DE); Kahl, Lothar, Dr., W-5060 Bergisch Gladbach (DE); Meixner, Jürgen, Dr., W-4150 Krefeld (DE); Wamprecht, Christian, dr., W-4040 Neuss 22 (DE); Schneider, Volker, Dr., W-4175 Wachtendonk (DE); Schönfelder, Manfred, Dr., W-5090 Leverkusen 3 (DE)

(56) Entgegenhaltungen:
- EP-A- 0 158 896
- US-A- 4 220 456

## Beschreibung

Die Erfindung betrifft ein Verfahren zur Aufarbeitung von beim Verspritzen von lösungsmittelhaltigen 1- oder 2-Komponenten-Polyurethanlacken anfallendem Lackschlamm und die Wiederverwendung der dabei isolierten organischen Bestandteile.

Lösungsmittelhaltige 2-Komponenten-Polyurethanlacke des Standes der Technik haben aufgrund ihrer hervorragenden Eigenschaften eine große praktische Bedeutung auf dem Beschichtungssektor gewonnen. Die Lacke werden in der Praxis in der Regel durch Spritzen auf die zu beschichtenden Substrate aufgetragen. Hierbei kann nicht vermieden werden, daß durch "Overspray" nennenswerte Mengen des eingesetzten Beschichtungsmittels verloren gehen. In der Praxis werden diese überschüssigen Mengen im allgemeinen mit Hilfe von Wasser aus der Abluft der Beschichtungsanlage ausgewaschen und unter Mitverwendung von Koaguliermitteln, wie beispielsweise oberflächenaktiven anorganischen Materialien wie Tonerde zur Koagulation gebracht. Dieser "Lackschlamm" konnte bislang keiner sinnvollen Wiederverwendung zugeführt werden.

Es war daher die der Erfindung zugrundeliegende Aufgabe, ein Verfahren zu entwickeln, welches eine sinnvolle Aufbereitung der im Lackschlamm vorliegenden Bindemittelkomponenten ermöglicht, bevor diese aufgrund der allmählich fortschreitenden Vernetzungsreaktion völlig unbrauchbar geworden sind. Das Verfahren sollte auch für lösungsmittelhaltige 1-Komponenten-Polyurethanlacke anwendbar sein, deren Bindemittel aus feuchtigkeitshärtenden NCO-Prepolymeren bestehen.

Es wurde jetzt gefunden, daß aus frischem Lackschlamm, bestehend im wesentlichen aus
a) organischen Polyisocyanaten,
b) vorzugsweise (im Falle der 2-Komponenten-Polyurethanlacke) organischen Verbindungen mit gegenüber Isocyanatgruppen reaktionsfähigen Gruppen, vorzugsweise organischen Polyhydroxylverbindungen,
c) gegebenenfalls Pigmenten und/oder sonstigen Lackhilfsmitteln
d) Koagulierungsmitteln und
e) Wasser
die organischen Bindemittelbestandteile extrahiert werden können, wenn der Lackschlamm vorher in ein organisches Lösungsmittel eingetragen und mit Verbindungen zur Reaktion gebracht wird, welche gegenüber Isocyanaten eine höhere Reaktivität als die acide Wasserstoffatome enthaltenden Reaktionspartner und als Wasser aufweisen.

Gegenstand der Erfindung ist somit ein Verfahren zur Aufarbeitung von beim Verspritzen von lösungsmittelhaltigen 2-Komponenten-Polyurethanlacken oder feuchtigkeitstrocknenden 1-Komponenten-Polyurethanlacken anfallendem Lackschlamm,
wobei man
(i) den Lackschlamm unter Einsatz von Wasser und Koagulierungsmitteln isoliert,
dadurch gekennzeichnet, daß man
(ii) den aus Lackbestandteilen und Koagulierungsmitteln, sowie aus Wasser bestehenden Lackschlamm, gegebenenfalls nach Entfernung zumindest eines Teils des Wassers mit einem gegenüber Isocyanatgruppen inerten organischen Lösungsmittel vermischt,
(iii) die in dem gemäß (ii) erhaltenen Gemisch vorliegenden, freien Isocyanatgruppen mit im Sinne der Isocyanat-Additionsreaktion monofunktionellen Verbindungen zur Reaktion bringt, welche gegenüber Isocyanatgruppen eine höhere Reaktivität aufweisen als Wasser und, im Falle von 2-Komponenten-Polyurethanlacken, die darin enthaltene Reaktivkomponente mit gegenüber Isocyanatgruppen reaktionsfähigen Gruppen, und
(iv) die gemaß (iii) anfallende organische Phase von der gegegebenenfalls vorliegenden wäßrigen Phase und/oder von gegebenenfalls vorliegenden unlöslichen Bestandteilen befreit.

Das Verfahren dient vorzugsweise zur Aufarbeitung von Lackschlamm, der bei der Verarbeitung von 2-Komponenten-Polyurethanlacken anfällt.

Die Polyisocyanatkomponente in derartigen 2-Komponenten-Polyurethanlacken besteht vorzugsweise aus sogenannten Lackpolyisocyanaten, d.h. aus Biuret-, Isocyanurat-, Urethan-, Allophanat- und/oder Uretdiongruppen aufweisenden Derivaten von einfachen Diisocyanaten wie insbesondere 1,6-Diisocyanatohexan oder Gemischen von 1,6-Diisocyanatohexan mit 1-Isocyanato-3,3,5-trimethyl-5-isocyanatomethylcyclohexan oder, weniger bevorzugt, auf Basis von aromatischen Diisocyanaten wie 2,4- und/oder 2,6-Diisocyanatotoluol. Diese an sich bekannten Lackpolisocyanate weisen im allgemeinen einen Gehalt an monomeren Ausgangsdiisocyanaten von unter 0,5 Gew.-% und einen Gehalt an Isocyanatgruppen von ca. 15-25 Gew.-% auf.

Bei den gegenüber Isocyanatgruppen reaktionsfähigen Reaktionspartnern in 2-Komponenten-Polyurethanlacken handelt es sich vor allem um die an sich bekannten höhermolekularen Polyhydroxylverbindungen mit einem Hydroxylgruppengehalt von 0,1 bis 10 Gew.-%. Beispielhaft genannt seien die an sich bekannten hydroxyfunktionellen Polyester, Polyether, Polyacrylate, Polyurethane, Polydienharze und Epoxidharze, sowie Mischungen derartiger Polyhydroxylverbindungen.

Bei den erfindungsgemäß weniger bevorzugten 1-Komponenten-Polyurethanlacken handelt es sich um solche, deren Bindemittel aus NCO-Prepolymeren mit einem NCO-Gehalt von ca. 3-16 Gew.-% bestehen, und die durch Umsetzung der oben beispielhaft genannten einfachen Diisocyanate oder auch der beispielhaft genannten Lackpolyisocyanate mit unterschüssigen Mengen an Polyhydroxylverbindungen der genannten Art erhalten werden.

Gegebenenfalls dem Originallack zugesetzte Pigmente, Füllstoffe und Lackhilfsmittel wie Verlaufsmittel, Glanzverbesserer, Antiabsetzmittel, Verdicker, Thixotropiermittel, Antioxidantien, Hitzestabilisatoren usw. haben auf das erfindungsgemäße Verfahren keinen Einfluß. Je nach Löslichkeit finden sich diese Bestandteile entweder in der gemäß Verfahrensstufe (iv) anfallenden organischen Phase oder in der unlöslichen festen Phase wieder.

Bei den beim erfindungsgemäßen Verfahren eingesetzten Koagulierungsmittel handelt es sich um Substanzen, die eine gewisse Affinität gegenüber den organischen Bestandteilen der Lacke aufweisen und eine Entklebung, d.h. eine Verhinderung des Anklebens der Lackbestandteile an den eingesetzten Geräten und Behältern verhindern. Der Einsatz der Koagulierungsmittel in Kombination mit Wasser bewirkt im allgemeinen die Bildung eines mehrphasigen Systems, in welchem die organischen Bindemittelbestandteile des eingesetzten Lacks koaguliert bzw. an den Koagulierungsmittel absorbiert vorliegen. Diese festen Bestandteile können durch Flotation oder Sedimentation von der Hauptmenge des Wassers abgeschieden und kontinuierlich abgeräumt werden und bilden dann den in der Verfahrensstufe (i) isolierten Lackschlamm.

Geeignete Koagulierungsmittel sind beispielsweise oberflächenaktive Substanzen wie beispielsweise solche vom Metalloxid- bzw. -hydroxid-Typ, wie Aluminiumoxide oder Hydroxide bzw. Eisenoxide, -oxidhydrate oder -hydroxide, Schichtsilikate, Wachsemulsionen oder Tonerde. Bevorzugtes Koagulierungsmittel ist Tonerde. Die bevorzugten Koagulierungsmittel sind sowohl in Wasser als auch im verwendeten Extraktionsmittel unlöslich.

Bei den in der Verfahrensstufe (ii) eingesetzten Lösungs- bzw. Extraktionsmittel handelt es sich vorzugsweise um Lösungsmittel der auch in den ursprünglichen Lacken eingesetzten Art, wobei Identität der Lösungsmittel selbstverständlich nicht erforderlich ist. Geeignete Lösungsmittel sind beispielsweise Aceton, Methylethylketon, Methylisobutylketon, Cyclopentanon, Cyclohexanon, Aromaten wie Benzol, Toluol, Xylol, Chlorbenzol, Nitrobenzol, Ether wie Tetrahydrofuran, Dioxan, Butylglykol, Ester wie Ethylacetat, Propylacetat, Butylacetat, Chlorkohlenwasserstoffe und aprotische Lösungsmittel wie Dimethylformamid, Dimethylacetamid, Dimethylsulfoxid oder Mischungen hieraus. Bevorzugt werden solche Lösungsmittel eingesetzt, in denen die organischen Lackbestandteile gut löslich sind, die jedoch selbst nicht oder nur sehr begrenzt mit Wasser mischbar sind. Hierzu gehören beispielsweise Butylacetat und insbesondere aromatische Kohlenwasserstoffe wie Toluol oder Xylol.

Bei den in der Verfahrensstufe (iii) eingesetzten Verbindungen mit gegenüber Isocyanatgruppen reaktionsfähigen Gruppen handelt es sich um im Sinne der Isocyanat-Additionsreaktion monofunktionelle Verbindungen, die gegenüber Isocyanatgruppen eine höhere Reaktionsbereitschaft aufweisen als Wasser und die in 2-Komponenten-Polyurethanlacken eingesetzten Reaktivkomponenten (insbesondere Polyhydroxylverbindungen). In Betracht kommen beispielsweise primäre oder sekundäre Monoamine mit aliphatisch gebundenen Aminogruppen des Molekulargewichtsbereichs 31-283 wie Methylamin, Ethylamin, Propylamin, Butylamin. Pentylamin, Hexylamin, Dimethylamin, Diethylamin, Dipropylamin, Dibutylamin. Dipentylamin, Dihexylamin, Diisopropylamin, Stearylamin, N-Methyl-stearylamin, Cyclohexylamin, Piperidin, Pyrrolidin oder Morpholin. Auch höhermolekulare Verbindungen, die eine primäre oder sekundäre aminische Aminogruppe aufweisen und ansonsten, zumindest in erster Näherung, gegenüber Isocyanatgruppen inert sind, können im Prinzip in der Verfahrensstufe (ii) eingesetzt werden, obwohl dies im Vergleich zu den genannten, einfachen Monoaminen weniger bevorzugt ist.

Im Falle der Verwendung von Monoaminen, insbesondere von bevorzugten Monoaminen der beispielhaft genannten Art, entstehen beim erfindungsgemäßen Verfahren Gemische von Bindemittelbestandteilen, die beispielsweise als Reaktivkomponente für organische Polyisocyanate in 2-Komponenten-Polyurethanlacken eingesetzt werden können. Im Falle der Verwendung von leicht flüchtigen Monoaminen können die letztendlich erhaltenen Gemische jedoch auch als Einbrennlacke eingesetzt werden, bei deren Aushärtung die Monoamine wie Blockierungsmittel abgespalten werden.

Eine weitere Gruppe von Verbindungen mit gegenüber Isocyanatgruppen reaktionsfähigen Gruppen, die in der Verfahrensstufe (iii) zum Einsatz gelangen können sind gegenüber Isocyanatgruppen hochreaktive monofunktionelle Blockierungsmittel wie insbesondere Lactame wie ε-Caprolactam und insbesondere Oxime wie beispielsweise Aceton-, Butanon- oder Cyclohexanon-oxim. Im Falle der Verwendung von derartigen Verbindungen entstehen beim erfindungsgemäßen Verfahren letztendlich Lösungen bzw. Bindemittelgemische, die als oder zur Herstellung von Einbrennlacken verwendet werden können. Hierbei kann es sich sowohl um lösungsmittelhaltige Einbrennlacke als auch um Pulverlacke handeln.

Eine weitere, jedoch weniger bevorzugte Gruppe von Verbindungen, die in der Verfahrensstufe (iii) eingesetzt werden können, sind Aminoalkohole, die wegen der extrem unterschiedlichen Reaktivität der Amino- und Hydroxylgruppen in erster Näherung als "im Sinne der Isocyanat-Additionsreaktion monofunktionell" bezeichnet werden können, insbesondere dann, wenn sie in solchen Mengen eingesetzt werden, daß auf jede Isocyanatgruppe mindestens eine Aminogruppe entfällt. Beispiele derartiger Aminoalkohole sind 2-Aminoethanol, 2-(Methylamino)ethanol, Diethanolamin, 3-Amino-1-propanol, 1-Amino-2-propanol, Diisopropanolamin, 2-Amino-2-methyl-propanol, 2-Amino-2-methyl-1,3-propandiol, 2-Amino-2-hydroxymethyl-1,3-propandiol oder deren Gemische.

Im Falle der Verwendung von derartigen Aminoalkoholen resultieren letztendlich Lösungen oder Gemische von organischen Polyhydroxylverbindungen, die beispielsweise erneut als Polyolkomponente in 2-Komponenten-Polyurethanlacken Verwendung finden können.

Als Verbindungen mit gegenüber Isocyanatgruppen reaktionsfähigen Gruppen, die in der Verfahrensstufe (iii) eingesetzt werden können, kommen weiterhin, jedoch weniger bevorzugt, Verbindungen in Betracht, die neben einer gegenüber Isocyanatgruppen hochreaktiven Gruppe eine weitere funktionelle Gruppe, insbesondere eine Carboxylat- oder Sulfonatgruppe aufweisen. Beispiele derartiger Verbindungen sind insbesondere die Alkalisalze von Aminocarbonsäuren oder Aminosulfonsäuren.

Im Falle der Verwendung derartiger Verbindungen entstehen in Wasser dispergierbare Umsetzungsprodukte, die beispielsweise als Zusatzmittel in wässrigen Beschichtungsmitteln Verwendung finden können.

Besonders bevorzugte Verbindungen mit gegenüber Isocyanatgruppen reaktionsfähigen Gruppen, die in der Verfahrensstufe (iii) eingesetzt werden können sind die beispielhaft genannten Monoamine und die beispielhaft genannten Oxime.

Bei der Durchführung des erfindungsgemäßen Verfahrens kommt das Wasser in einem sehr hohen Überschuß, bezogen auf die als "Overspray" anfallenden Lackbestandteile zum Einsatz. Die Koagulierungsmittel werden im allgemeinen in Mengen von 10 bis 1 000, vorzugsweise 20 bis 500 Gew.-%, bezogen auf das Gewicht des "Overspray" eingesetzt.

Die Menge des Lösungsmittels wird so gewählt, daß eine gute Abtrennung zwischen fester und flüssiger Phase möglich wird. Überlicherweise ist die 0,5 bis 5-fache Menge, bezogen auf den Lackschlamm, der im wesentlichen, wie ausgeführt, aus Koagulierungsmittel, anhaftendem Wasser und Lackbestandteilen besteht, erforderlich und ausreichend.

Die Menge der in der Verfahrensstufe (iii) eingesetzten Komponente mit gegenüber Isocyanatgruppen reaktionsfähigen Gruppen wird im allgemeinen so gewählt, daß auf jede Isocyanatgruppe der Lackkomponente 0,25-5, vorzugsweise 0,9-1,2 gegenüber Isocyanatgruppen hochreaktive Gruppen der genannten Art entfallen.

Bei der Durchführung des erfindungsgemäßen Verfahrens werden die als "Overspray" anfallenden Lackbestandteile, wie ausgeführt mit Wasser ausgewaschen, wobei das Wasser bereits das Koagulierungsmittel in aufgeschlämmter Form enthalten kann, oder wobei dieses dem Gemisch aus Wasser und Lackbestandteilen nachträglich zugesetzt wird. Anschließend wird der sich dabei bildende Lackschlamm durch Flotation oder Sedimentation abgeschieden und durch Dekantieren von der Hauptmenge des Wassers befreit. Der dergestalt isolierte Lackschlamm wird dann in der nachfolgenden Verfährensstufe (ii) mit dem Lösungsmittel vermischt, worauf das hierbei resultierende Gemisch in der Verfahrensstufe (iii) mit den gegenüber Isocyanatgruppen reaktionsfähigen Verbindungen umgesetzt wird. Diese Umsetzung erfolgt im allgemeinen innerhalb des Temperaturbereichs von 0-150°C, vorzugsweise von 15-80°C und wird bis zum völligen Verschwinden der vorliegenden Isocyanatgruppen durchgeführt. Schließlich werden in der letzten Verfährensstufe noch vorliegendes Wasser, beispielsweise durch Phasentrennung, Destillation oder azeotrope Destillation und feste Bestandteile durch Filtration oder Dekantieren aus der Lösungsmittelphase abgetrennt. Die resultierende Lösung enthält die chemisch modifizierten Lackbestandteile, die, entsprechend den oben gemachten Ausführungen, einer sinnvollen Wiederverwendung zugeführt werden können, wobei das vorliegende Lösungsmittel mitverwendet oder nach Abdestillieren gegebenenfalls durch ein anderes Lösungsmittel ersetzt werden kann.

Zur Ausbeuteoptimierung ist es auch möglich, das gemäß Verfahrensstufe (iv) abgetrennte Wasser und/oder das im organischen Lösungsmittel unlösliche feste Material mit einem gegenüber Isocyanatgruppen inerten Lösungsmittel der beispielhaft genannten Art extrahieren und die dabei anfallende Lösungsmittelphase mit der Hauptmenge der gemäß Verfahrensstufe (iv) erhaltenen Lösung zu vereinigen.

In den nachfolgenden Beispielen beziehen sich alle Prozentangaben auf das Gewicht.

### Beispiel 1

In einer Kabine mit Wasserabscheidung wird 1 kg Lack verspritzt. Es handelt sich um einen 50 %igen, lösungsmittelhaltigen Klarlack, dessen Bindemittel aus einem handelsüblichen Polyacrylatpolyol (®Desmophen A 450, Bayer AG) mit einem OH-Gehalt von 2,0 %, bezogen auf das Festharz, und der equivalenten Menge trimerisiertes Hexamethylendiisocyanat (®Desmodur N 3390, Bayer AG) mit einem NCO-Gehalt von 19,4 % besteht. Das Lacklösemittel ist Xylol. Als entklebend wirkendes Koaguliermittel ist dem Kabinenwasser in einer Konzentration von 0,4 % ®Ipafloc, ein Tonerdeprodukt der Fa. IPA, zugesetzt worden. Das Gemisch aus Kabinenwasser, ®Ipafloc und "Overspray" wird in ein Absetzbecken geleitet, wo es mit 20 %, bezogen auf "Overspray", ®Ipased, einem handelsüblichen Koaguliermittel auf Tonerde-Basis der Fa. IPA vermischt wird. Bei dem "Overspray" dieses Beispiels handelt es sich selbstverständlich um die Gesamtmenge des eingesetzten Lacks, da das Beispiel nicht die Lackierung eines Substrats sondern lediglich das Prinzip der Wiederverwendung von "Overspray" dokumentieren soll.

1 Stunde nach Beendigung des Spritzvorgangs wird der abgesetzte Lackschlamm (2,5 kg) abgeräumt und in einen 5-l-Rührbehälter gefüllt. Bei Raumtemperatur werden unter gutem Rühren 2,5 l Xylol und, entsprechend der equimolaren Isocyanatmengen, Di-n-butylamin zugegeben. Nach 3 Stunden bei Raumtemperatur wird das Wasser azeotrop abdestilliert, dann die Tonerde abfiltriert. Die als Filtrat anfallende Lösung enthält 85 % des ursprünglich eingesetzten Lackbindemittels. welches auf diese Weise wiederverwendet werden kann. Die Bindemittellösung wird auf einen Festgehalt von 50 % eingeengt.

Das so wiedergewonnene Bindemittel wird mit einer, den Hydroxylgruppen equivalenten Menge an ®Desmodur N 3390 versetzt und als 2-Komponenten-Polyurethanlack auf ein Prüfblech per Spritzauftrag aufgetragen. Nach Aushärtung bei Raumtemperatur erhält man einen klaren, vernetzten, lösemittelbeständigen Lackfilm.

### Beispiel 2

Man verfährt wie in Beispiel 1. Das wiedergewonnene Bindemittel wird als 1-Komponenten-Polyurethansystem appliziert und 30 Minuten bei 170°C eingebrannt. Man erhält einen klaren, vernetzten, lösemittelbeständigen Lackfilm.

### Beispiel 3

Man verfährt wie in Beispiel 1 angegeben unter Verwendung des gleichen Lackes. Der abgeräumte Lackschlamm wird in einen 5-l-Rührbehälter gegeben. Bei Raumtemperatur werden unter gutem Rühren 2,5 l Toluol und eine der Isocyanatemenge equivalente Menge an Butanonoxim zugegeben. Nach 5 Stunden wird das Wasser azeotrop abdestilliert, dann die Tonerde abfiltriert. Nach Zugabe von 2,5 g Zinn-(II)-octoat wird die Bindemittellösung in einem Sprühtrockner zu Pulverlack verarbeitet.

Der Pulverlack wird auf ein Prüfblech appliziert und 30 Minuten bei 140°C eingebrannt. Man erhält einen klaren, vemetzten, lösemittelbeständigen Lackfilm.

### Beispiel 4

Man verfährt wie in Beispiel 1 und verspritzt 1 kg Lack unter Verwendung des gleichen Polyisocyanates und Koagulierungsmittels. Als Polyol wird ein handelsüblicher hydroxygruppenhaltiger Polyester (®Desmorphen 670, Bayer AG) mit einem OH-Gehalt von 4,3 %, bezogen auf das Festharz, verwendet. Lacklösemittel ist Butylacetat.

Der entstandene Lackschlamm wird in einem 5-l-Rührbehälter gefüllt. Bei Raumtemperatur werden 2,0 l Butylacetat und eine der Isocyanatmenge equivalente Menge an Methylstearylamin zugegeben. Nach 3 Stunden erfolgt die Aufarbeitung wie in Beispiel 1.

Das so wiedergewonnene Bindemittel wird mit einer, den vorliegenden Hydroxylgruppen equivalenten Menge (®Desmodur N 3390) versetzt und auf einem Prüfblech per Spritzauftrag appliziert. Nach Aushärtung bei Raumtemperatur erhält man einen klaren, vernetzten, lösungsmittelbeständigen Lackfilm.

## Patentansprüche

1. Verfahren zur Aufarbeitung von beim Verspritzen von lösungsmittelhaltigen 2-Komponenten-Polyurethanlacken oder feuchtigkeitstrocknenden 1-Komponenten-Polyurethanlacken anfallendem Lackschlamm,
wobei man
(i) den Lackschlamm unter Einsatz von Wasser und Koagulierungsmitteln isoliert,
dadurch gekennzeichnet, daß man
(ii) den aus Lackbestandteilen und Koagulierungsmitteln sowie aus Wasser bestehenden Lackschlamm, gegebenenfalls nach Entfernung zumindest eines Teils des Wassers, mit einem gegenüber Isocyanatgruppen inerten organischen Lösungsmittel vermischt,
(iii) die in dem gemäß (ii) erhaltenen Gemisch vorliegenden, freien Isocyanatgruppen mit im Sinne der Isocyanat-Additionsreaktion monofunktionellen Verbindungen zur Reaktion bringt, welche gegenüber Isocyanatgruppen sowohl eine höhere Reaktivität aufweisen als Wasser als auch, im Falle von 2-Komponenten-Polyurethanlacken, die darin enthaltene Reaktivkomponente mit gegenüber Isocyanatgruppen reaktionsfähigen Gruppen, und
(iv) die gemäß (iii) anfallende organische Phase von der gegebenenfalls vorliegenden wäßrigen Phase und/oder von gegebenenfalls vorliegenden unlöslichen Bestandteilen befreit.

2. Verfahren gemäß Anspruch 1, dadurch gekennzeichnet, daß man in der Verfahrenstufe (iii) als gegenüber Isocyanatgruppen reaktionsfähige Verbindungen aliphatische primäre oder sekundäre Monoamine des Molekulargewichtsbereichs 31-283 verwendet.

3. Verfahren gemäß Anspruch 1, dadurch gekennzeichnet, daß man in der Verfahrensstufe (iii) als gegenüber Isocyanatgruppen reaktionsfähige Verbindungen Blockierungsmittel für Isocyanatgruppen verwendet, die bezüglich ihrer Reaktivität den genannten Bedingungen entsprechen.

4. Verfahren gemäß Anspruch 1 bis 3, dadurch gekennzeichnet, daß man das gemäß Verfahrensstufe (iv) abgetrennte Wasser und/oder das im organischen Lösungsmittel unlösliche feste Material mit einem gegenüber Isocyanatgruppen inerten Lösungsmittel extrahiert und die dabei anfallende Lösungsmittelphase mit der Hauptmenge der gemäß Verfahrensstufe (iv) erhaltenen Lösung vereinigt.

5. Verwendung der gemäß Verfahrensschritt (iv) von Anspruch 1 bis 4 anfallenden organischen Lösung bzw. des darin gelösten organischen Materials als Reaktionspartner für organische Polyisocyanate in 2-Komponenten-Polyurethanlacken.

6. Verwendung der gemäß Verfahrensstufe (iv) von Anspruch 1 bis 4 anfallenden Lösung bzw. des darin gelösten organischen Materials als/oder zur Herstellung von unter dem Einfluß von Hitze vernetzbare(n) 1-Komponenten-Polyurethanlacke(n).

7. Verwendung des in der gemäß Verfahrensstufe (iv) von Anspruch 1 bis 4 anfallenden Lösung gelösten organischen Materials, nach Entfernung des Lösungsmittels, zur Herstellung von Hitze-vernetzbaren Pulverlacken.

## Claims

1. A process for working up varnish slurry accumulating from the spraying of 2-component polyurethane varnishes which contain solvent or moisture drying 1-component polyurethane varnishes, wherein
(i) the varnish slurry is isolated using water and coagulating agents,
characterised in that
(ii) the varnish slurry consisting of varnish components and coagulating agents and water, optionally after removing at least some of the water, is mixed with an organic solvent which is inert towards isocyanate groups,
(iii) the free isocyanate groups present in the mixture obtained in accordance with (ii) are reacted with compounds which are monofunctional in the sense of the isocyanate addition reaction, which possess groups capable of reacting with isocyanate groups and which have both a higher reactivity towards isocyanate groups than water and also, in the case of 2-component polyurethane varnishes, than the reactive components contained therein, and
(iv) the organic phase accumulating in accordance with (iii) is freed of the optionally present aqueous phase and/or of the optionally present insoluble components.

2. A process according to Claim 1, characterised in that aliphatic primary or secondary monoamines with molecular weights in the range 31 - 283 are used as compounds capable of reacting with isocyanate groups in process step (iii).

3. A process according to Claim 1, characterised in that blocking agents for isocyanate groups are used as compounds which are capable of reacting with isocyanate groups in process step (iii), these conforming to the conditions mentioned with respect to their reactivity.

4. A process according to Claims 1 to 3, characterised in that the water separated out in accordance with process step (iv) and/or the solid material which is insoluble in the organic solvent is extracted with a solvent which is inert towards isocyanate groups and the solvent phase thus accumulating is combined with the major portion of the solution obtained in accordance with process step (iv).

5. Use of the organic solution or the organic material dissolved therein which accumulates in accordance with process step (iv) in Claims 1 to 4 as a reaction partner for organic polyisocyanates in 2-component polyurethane varnishes.

6. Use of the solution or the organic material dissolved therein which accumulates in accordance with process step (iv) in Claims 1 to 4 as, or to prepare, 1-component polyurethane varnish(es) which is/are cross-linkable under the effect of heat.

7. Use of the organic material dissolved in the solution which accumulates in accordance with process step (iv) in Claims 1 to 4, after removing the solvent, to prepare thermally cross-linkable coating powders.

## Revendications

1. Procédé pour le traitement de boues de laques, de vernis ou de peintures que l'on obtient lors de la pulvérisation de laques, de vernis ou de peintures de polyuréthanne à deux composants contenant un solvant ou encore de laques, de Vernis ou de peintures de polyuréthanne à un composant séchant à l'humidité, dans lequel
(i) on isole les boues de laques, de vernis ou de peintures en mettant en oeuvre de l'eau et des agents de coagulation,
caractérisé en ce que
(ii) on mélange, avec un solvant organique inerte vis-à-vis des groupes isocyanate, les boues de laques, de vernis ou de peintures constituées par des composants de laques, de vernis ou de peintures et par des agents de coagulation, ainsi que par de l'eau, éventuellement après élimination d'au moins une partie de l'eau,
(iii) on amène à réagir les groupes isocyanate libres présents dans le mélange obtenu d'après (ii) avec des composés monofonctionnels dans le sens de la réaction d'addition d'isocyanate, qui présentent une réactivité vis-à-vis des groupes isocyanate supérieure aussi bien à celle de l'eau qu'à celle, dans le cas de laques, de vernis ou de peintures de polyuréthanne à deux composants, du composant réactif qui y est contenu comportant des groupes aptes à réagir vis-à-vis de groupes isocyanate, et
(iv) on libère la phase organique que l'on obtient conformément à (iii) de la phase aqueuse éventuellement présente et/ou des composants insolubles éventuellement présents.

2. Procédé selon la revendication 1, caractérisé en ce que, dans l'étape opératoire (iii), comme composés aptes à réagir vis-à-vis de groupes isocyanate, on utilise des monoamines primaires ou secondaires aliphatiques du domaine de poids moléculaire de 31 à 283.

3. Procédé selon la revendication 1, caractérisé en ce que, dans l'étape opératoire (iii), comme composés aptes à réagir vis-à-vis de groupes isocyanate, on utilise des agents de blocage pour des groupes isocyanate, qui correspondent, quant à leur réactivité, aux conditions mentionnées.

4. Procédé selon les revendications 1 à 3, caractérisé en ce qu'on extrait l'eau séparée conformément à l'étape opératoire (iv) et/ou la matière solide insoluble dans le solvant organique, dans un solvant inerte vis-à-vis de groupes isocyanate, et on combine avec la quantité principale de la solution obtenue conformément à l'étape opératoire (iv), la phase de solvant que l'on obtient en l'occurrence.

5. Utilisation de la solution organique que l'on obtient conformément à l'étape opératoire (iv) des revendications 1 à 4, respectivement de la matière organique qui y est dissoute, comme partenaire réactionnel pour des polyisocyanates organiques dans des laques, des vernis ou des peintures de polyuréthanne à deux composants.

6. Utilisation de la solution que l'on obtient conformément à l'étape opératoire (iv) des revendications 1 à 4, respectivement de la matière organique qui y est dissoute comme laque(s), vernis ou peinture(s) à un composant réticulable(s) à la chaleur ou pour la préparation de cette (ces) dernière(s).

7. Utilisation de la matière organique dissoute dans la solution que l'on obtient conformément à l'étape opératoire (iv) des revendications 1 à 4, après élimination du solvant pour la préparation de laques, de vernis ou de peintures pulvérulents réticulables à la chaleur.
